# FASCICULE DE BREVET EUROPEEN

(11) **EP 1 778 733 B1**
(45) Date de publication et mention de la délivrance du brevet: **09.03.2011**
(21) Numéro de dépôt: 05793346.7
(22) Date de dépôt: 29.07.2005
(51) Int. Cl.: C08B 31/08, C08B 33/08, C08B 35/08, C08B 37/00

(54) **PROCEDE D'OXYDATION CONTROLEE DE POLYSACCHARIDES**
VERFAHREN ZUR GESTEUERTEN OXIDATION VON POLYSACCHARIDEN
METHOD FOR THE CONTROLLED OXIDATION OF POLYSACCHARIDES

(30) Priorité: 29.07.2004 FR 0408402
(43) Date de publication de la demande: 02.05.2007
(73) Titulaire: CENTRE NATIONAL DE LA RECHERCHE SCIENTIFIQUE (CNRS), 75794 Paris Cedex 16 (FR); Institute National Polytechnique de Toulouse, B.P. 34 038 31029 Toulouse Cedex 4 (FR)
(72) Inventeur: VIGNON, Michel, F-38240 MEYLAN (FR); MONTANARI, Suzelei, F-01600 Trévoux (FR); SAMAIN, Daniel, F-38400 Saint Marti d'Hères (FR); CONDORET, Jean-Stéphane, F-31400 TOULOUSE (FR)
(74) Mandataire: Peaucelle, Chantal
(86) Numéro de dépôt international: PCT/FR2005/002002
(87) Numéro de publication internationale: WO 2006/018552

(56) Documents cités:
- EP-A- 0 161 212
- US-A- 2 472 590
- US-A- 4 990 601
- US-A- 5 541 316

## Description

L'invention a pour objet un procédé d'oxydation contrôlée d'oligo-et/ou de polysaccharides contenant des groupes hydroxyles primaires -CH₂OH libres, à l'aide d'un agent oxydant, conduisant de manière sélective à des oligo-et/ou polysaccharides carboxylés.

Dans la suite de la description et dans les revendications le terme "polysaccharides" sera utilisé pour désigner indifféremment des oligosaccharides, des polysaccharides, ou leurs mélanges.

L'oxydation de polysaccharides par le dioxyde d'azote (NO₂/N₂O₄) , comme agent oxydant, est une réaction bien connue.

Yackel et coll ont notamment décrit dans US 531,283 l'oxydation sélective de la cellulose par le NO₂ gazeux dans des conditions de température inférieures ou égales à 20°C. L'utilisation du NO₂ gazeux s'est toutefois révélée délicate conduisant notamment à des hétérogénéités d'oxydation. Différents procédés d'oxydation en milieu solvant organique ont alors été proposés par plusieurs auteurs.

Ainsi, Kenyon et coll. dans US 2 423 707 ou encore Ashton et coll. dans US 3 364 200 ont décrit l'oxydation de la cellulose avec le dioxyde d'azote dans des solvants non-aqueux tels que le tétrachlorure de carbone et les Fréon 113 et 11. Le brevet US 5 180 398 de Boardman et Saferstein décrit l'oxydation de la cellulose, par le dioxyde d'azote dans des solvants perfluorés et Kosowski et coll. dans US 5 914 003 ont utilisé une autre classe de solvant, les hydrofluoroéthers, pour remplacer les chlorofluocarbones utilisés préalablement.

L'utilisation de solvants halogénés représente cependant un risque pour l'environnement. En outre, pour les nombreuses applications, et notamment dans le domaine médical, il s'impose de disposer de produits oxydés de manière homogène.

Ces impératifs ont conduit les inventeurs à rechercher de nouvelles conditions d'oxydation plus satisfaisantes pour l'environnement et permettant de disposer de polysaccharides carboxylés homogènes répondant mieux aux exigences de la pratique.

Leurs travaux ont alors permis de constater qu'il était possible de réaliser l'oxydation des polysaccharides dans un milieu réactionnel alternatif, permettant notamment de solubiliser des quantités importantes de l'agent oxydant, tout en préservant sa réactivité.

L'invention a donc pour but de fournir un nouveau procédé d'oxydation de polysaccharides permettant d'obtenir un taux d'acide carboxylique en % massique variable, allant dans le cas de la cellulose jusqu'à 25,5% environ (ce qui correspond à 100% d'oxydation des groupes hydroxyles primaires), contrôlé par la durée de la réaction et la quantité d'agent oxydant, réparti de manière homogène, quel que, soit le degré d'oxydation.

Le procédé de l'invention d'oxydation ,contrôlée de polysaccharides contenant des groupes -CH₂OH libres, à l'aide d'un agent oxydant, est caractérisé en ce qu'on utilise pour la réaction d'oxydation un fluide densifié inerte vis-à-vis des agents oxydants mis en oeuvre.

Ce fluide densifié est composé de molécules qui sont gazeuses dans des conditions normales de température et de pression, qui sont inertes vis-à-vis des agents oxydants mis en oeuvre et qui sont comprimées au-delà de 2 MPa (20 bars).

Les fluides densifiés sont des gaz comprimés à une pression telle qu'ils n'obéissent plus à l'équation d'état du type gaz parfaits. Le comportement thermodynamique dans ces gammes de température et de pression est complexe et peut faire apparaître par exemple 2 phases, un liquide expansé et un gaz densifié.

Dans le cas du gaz densifié, le produit de la pression par le volume cesse d'être une constante et diminue avec l'augmentation de la pression ce qui entraîne une augmentation corrélative de la densité. Ce phénomène peut être interprété par la création, à partir d'une certaine pression, d'interactions entre molécules.

Le comportement des fluides densifiés va ensuite dépendre de la proximité du point critique par rapport aux conditions de température et de pression utilisées.

Selon les cas, les fluides densifiés se trouvent donc soit sous forme d'une phase gazeuse densifiée soit sous forme d'une phase liquide expansée.

Ils présentent généralement des propriétés qui sont intermédiaires entre celles des gaz et des liquides. Contrairement aux gaz, ils présentent notamment un certain pouvoir solvant vis-à-vis de molécules anormalement peu volatiles non seulement sous leur forme liquide expansée mais également sous leur forme phase gazeuse densifiée. Ce pouvoir solvant est largement dépendant de la densité du gaz densifié et de l'affinité entre les molécules de solvant et celles de soluté.

Des gaz inertes utilisables comprennent les gaz rares He, Ne, Kr, Ar, ou encore CO₂, N₂, ou les gaz perhalogénés, et leurs mélanges, ce qui présente l'avantage de disposer d'un solvant de l'agent oxydant, soit déjà dans son état d'oxydation maximal, soit neutre et inerte vis-à-vis des agents oxydants mis en oeuvre.

Le ou les gaz inertes sont utilisés seuls ou en mélange avec d'autres co-solvants liquides dans les conditions normales de température et de pression.

Dans une variante, le ou les gaz inertes sont utilisés avec un co-solvant liquide, comme un solvant perfluoré.

Les gaz inertes sont plus particulièrement le CO₂, le diazote, l'argon ou leurs mélanges. Dans le cas particulier de l'utilisation de ces gaz, le produit final sera donc dépourvu de contaminants liés au solvant, ce qui revêt un grand intérêt au regard des applications industrielles visées pour les polysaccharides carboxylés formés, en particulier pour leurs applications biomédicales.

On notera de plus avec intérêt que leur utilisation s'inscrit dans la logique de procédés sûrs et préservant l'environnement.

L'agent oxydant est de préférence le dioxyde d'azote, ce terme désignant le NO₂, le dimère N₂O₄ et leurs mélanges.

Les gaz inertes comme le CO₂, l'azote ou l'argon sont normalement connus pour leur absence d'interaction avec d'autres molécules. Mais les inventeurs ont trouvé que de manière très surprenante, leur utilisation sous forme de fluides densifiés, soit sous forme gazeuse densifiée, soit sous forme liquide expansée, permettait de solubiliser des quantités importantes de réactif NO₂, ou d'agent oxydant en général.

Dans le cas de l'utilisation du CO₂ comme fluide densifié inerte, on a constaté un certain pouvoir solvant dans des conditions de gaz densifié et de liquide expansé.

Toutefois, la solubilité , du NO₂ dans la phase liquide expansée est infinie tandis qu'elle est limitée par une valeur seuil dans la phase gaz densifié.

Celle-ci est variable en fonction des conditions de température et de pression.

A titre indicatif, elle est de l'ordre de 15mg/ml à 40°C et 8 MPa (80 bars). Au delà de cette valeur, il se produit un phénomène de condensation avec apparition de la phase liquide expansée.

Le NO₂ solubilisé dans ces conditions permet bien de conduire à une réaction d'oxydation des hydroxyles primaires avec les polysaccharides de manière satisfaisante.

Cette oxydation est effective et sélective dans les deux phases. Cependant la quantité de NO₂ nécessaire à mettre en jeu dans les phases gaz densifié pour obtenir un degré d'oxydation satisfaisant apparaît être plus faible que dans le cas des liquides expansés. Ces résultats traduisent une réactivité plus importante du NO₂ dans les phases gaz densifié que dans les phases liquides expansées.

La réaction d'oxydation est réalisée dans un système clos, sous pression, de préférence à une température de l'ordre de 20 à 60°C, notamment de 20 à 40°C et sous une pression de l'ordre de 2 à 40 MPa (20 à 400 bars), notamment de 6 à 18 MPa (60 à 180 bars) environ.

Dans un mode de réalisation avec CO₂, la température est de l'ordre 31 à 50°C, notamment de 40°C environ et sous une pression de l'ordre de 7,4 à 11 MPa (74 à 110 bars), notamment de 9 MPa (90 bars) environ.

Les polysaccharides sont placés dans le réacteur qui est ensuite rempli du fluide densifié inerte. Ces polysaccharides se présentent de manière générale sous forme de "fibres", ce terme désignant indifféremment, des fibrilles, microfibrilles, cristaux, poudres ou lyophilisats ou autres formes.

On utilise l'agent oxydant, notamment le dioxyde d'azote, le cas échéant en présence d'oxygène. Cet agent oxydant est mis en oeuvre en excès par rapport à la quantité de CH₂OH qu'on souhaite oxyder. Le gaz inerte, qui constitue le solvant est utilisé en excès par rapport au NO₂, étant entendu que les quantités respectives de ces composés seront adaptées par l'homme du métier selon l'ensemble des conditions opératoires choisies pour l'obtention d'un polysaccharide ayant le taux de carboxyle désiré.

A la fin de la réaction, on effectue un lavage par dilution en générant un débit de fuite du mélange solvant(s)/agent oxydant dans le réacteur, tout en maintenant, par des moyens appropriés, la pression constamment au-dessus ou au même niveau que la pression de travail. L'agent oxydant reste ainsi à l'état dissous dans le fluide densifié et peut être alors éliminé progressivement sans se trouver dans un état liquide surconcentré en NO₂.

Cette disposition de lavage par dilution permet en outre d'éliminer avec efficacité l'agent oxydant ou les autres sous-produits qui pourraient se trouver à l'intérieur des polysaccharides traités.

Après l'étape de lavage par balayage et élimination du NO₂, la détente est effectuée dans des conditions permettant de rester en système monophasique. On opère notamment à température élevée, de l'ordre de 40°C.

Pour s'assurer que tout l'agent oxydant résiduel a été éliminé, on effectue avantageusement un balayage avec un gaz inerte à faible pression.

Les polysaccharides récupérés à l'issue de la réaction d'oxydation sont lavés par un solvant ou un mélange de solvants polaires. Des solvants appropriés sont du type alcool, par exemple isopropanol/eau, pour éliminer les sous-produits de la réaction, comme HNO₃.

Le taux d'acide carboxylique en % massique peut aller jusqu'à 25,5% dans le cas de la cellulose.

Les polysaccharides soumis à la réaction d'oxydation sont des produits semi cristallins ou microfibrillaires, tels que cellulose, chitine, amidon, amylose, nigérane ((α(1->3) α (1->4) glucane)), β(1->3) glucane, β(1->4) mannane, β(1->3) xylane, inuline, agarose, carraghénanes, glucomannane.

On rappelle que la cellulose native est constituée d'unités D-glucopyranoses liées entre elles par des liaisons β(1->4) et existe sous plusieurs formes cristallines (forme cellulose I à l'état naturel; cellulose II, après un traitement en milieu alcalin ou une dérivatisation, suivie d'une régénération/coagulation ; cellulose III, après traitement de la cellulose naturelle en milieu NH₃ liquide, ou en présence d'amines).

Le terme "cellulose", tel qu'utilisé dans la description et les revendications, désigne indifféremment les différents types de cellulose.

La cellulose II peut être notamment sous forme de fils, éponges, films.

En particulier, la cellulose II a l'avantage d'être mise en forme dans une filière d'extrusion pour donner des filaments de taille variable. Tous lés types de cellulose régénérée peuvent être utilisés, qu'ils soient obtenus selon le procédé viscose ou un procédé solvant, à condition qu'elle ne soit pas traitée par TiO₄, ou des métaux lourds.

Il sera également possible selon les conditions opératoires d'oxyder des tissus à partir de ces filaments tout en conservant la structure de ces tissus, afin d'obtenir des pansements absorbants, et/ou des applications du type pansements hémostatiques,ou des fils chirurgicaux biorésorbables.

La chitine est constituée d'unités N-acétyl-D-glucosamines liées entre elles par des liaisons β (1→4).

Le β(1→3) glucane est constitué d'unités D-glucopyranoses liées entre elles par des liaisons (1→3).

Le β(1→4) mannane est constitué d'unités D-mannopyranoses liées entre elles par des liaisons (1→4).

Le nigérane est constitué d'unités D-glucopyranoses liées entre elles parades liaisons alternées α(1→3) et α(1→4).

L'amidon est constitué d'unités D-glucopyranoses liées entre elles par des liaisons α(1→4) et qui portent par endroit des branchements constitués d'unités D-glucopyranoses liées entre elles par des liaisons α(1→6).

L'amylose est constitué d'unités D-glucopyranoses liées entre elles par des liaisons α (1→4).

L'inuline est constituée d'unités β (1→2) -D-fructofuranoses.

L'agarose est constitué d'une unité β (1→4) -D-galactopyranose qui alterne avec une unité α (1→3) 3,6-anhydro-L-galactopyranose.

Les carraghénanes sont constitués d'une unité β (1→4) -D-galactopyranose qui alterne avec une unité α (1→3) 3,6-anhydro-D-galactopyranose, et portent un 1 à 3 groupes sulfate (respectivement κ, i et λ carraghénane)

Les polymères carboxylés obtenus possèdent un large spectre de propriétés leur conférant un grand intérêt dans de nombreuses applications où ils sont utilisables seuls ou sous forme d'assemblages avec deux ou plusieurs polysaccharides.

Ils présentent une grande importance notamment:
- dans l'industrie alimentaire, comme épaississants, stabilisants de dispersions, d'émulsions et de suspensions, à titre d'agents tensio-actifs pour des denrées à faible pouvoir calorique, ou à faible' proportion de graisses ou de cholestérol ;
- dans l'industrie des peintures, du papier, des textiles, comme agents de stabilisation stérique des charges ;
- en agriculture, dans des applications de pesticides ;
- dans l'industrie pharmaceutique, comme excipient de médicaments, agents de contrôle de relargage de principes actifs ou de biomolécules, support de pommades ou de crèmes, agents de transit intestinal, pâtes dentaires, support d'arômes ;
- dans le domaine médical, biomédical ou paramédical (séparation et purification de protéines, de virus par précipitation/adsorption par affinité) ; en chirurgie, ces polysaccharides sont particulièrement utiles par exemple comme fils et/ou tissus biorésorbables pour la réparation des tissus ou organes chez l'homme ou l'animal. Ils permettent notamment le soutien et la prévention des adhérences entre deux organes au cours d'une opération chirurgicale. Ils sont également avantageux comme pansements, tissus et éponges, qui possèdent des propriétés hémostatiques et/ou bactériostatiques ;
- dans l'industrie cosmétique, comme agents viscosifiants et gélifiants, en particulier comme gels ; ou comme support de pommades et de crèmes, ou autres formulations cosmétiques, en tant qu'agents de stabilisation des charges ;
- comme agents complexants ou séquestrants, des ions métalliques, comme l'ion calcium, utiles notamment pour les détergents, les cosmétiques, le traitement de surface;
- des métaux lourds et les éléments radioactifs dans l'industrie nucléaire.

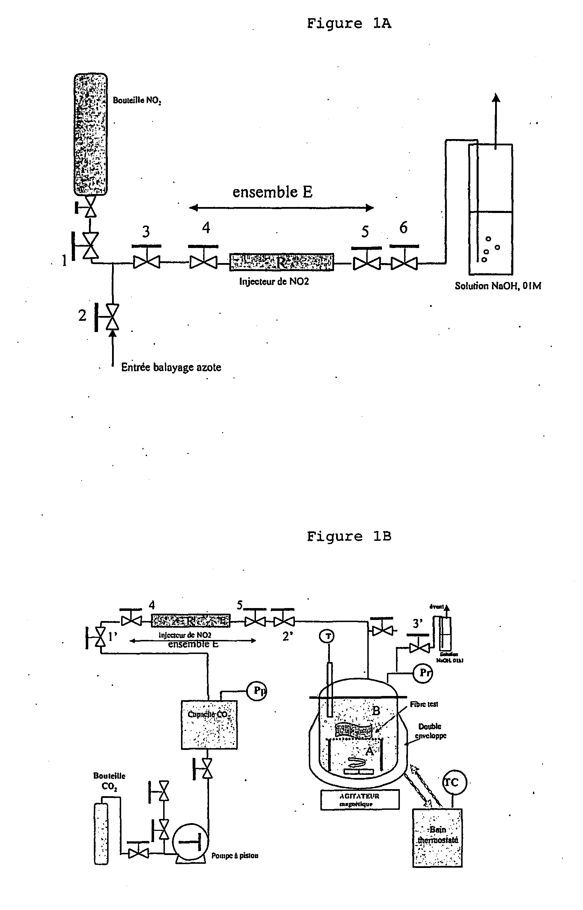

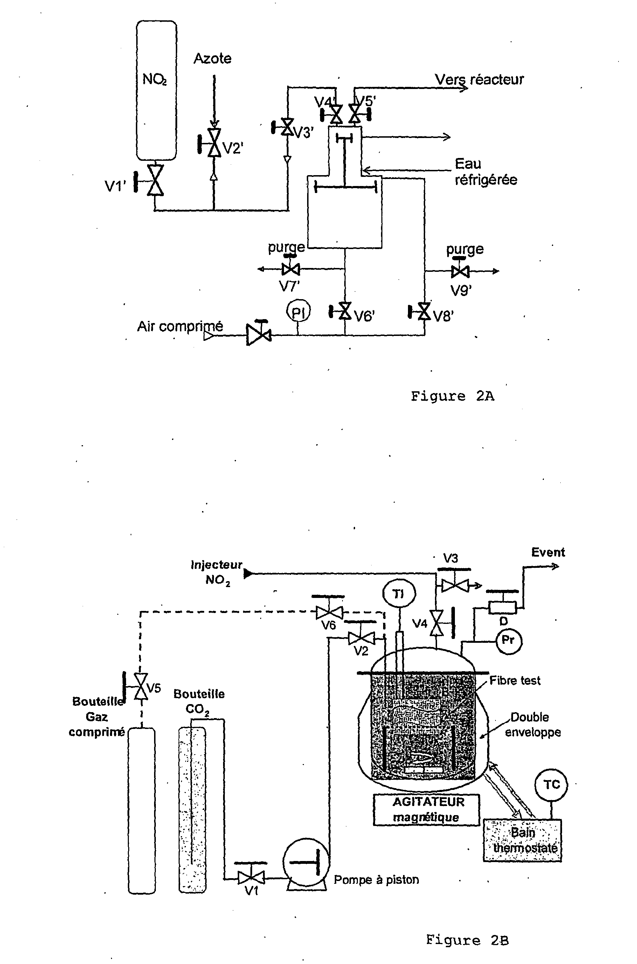

D'autres caractéristiques et avantages de l'invention apparaîtront dans les exemples qui suivent et en se référant, aux figures 1A et 1B, et aux figures 2A et 2B, qui représentent la description d'appareillages utilisés pour l'oxydation de polysaccharides.

Description de l'appareillage pour les expériences 1 à 5 :
Mode opératoire : Protocole 1
Introduction du NO₂ par le réservoir

Le NO₂ est d'abord pré-chargé dans un réservoir de transfert R de 20mL maintenu à 10°C et inséré dans un dispositif F comportant plusieurs vannes selon la figure 1A. La bouteille (Air Liquide, réf DR 030259) contenant le NO₂ est équilibrée à une température de 10°C, puis connectée à la vanne 1 du dispositif F. Ce dernier a été au préalable séché de façon exhaustive avec un flux d'azote et maintenu ensuite sous une pression d'azote de 0,2 MPa (2 bars). Cette pression est relâchée au moment précis où la connexion avec la bouteille de NO₂ est réalisée. Ces précautions sont prises de façon à éviter le contact du NO₂ avec de l'eau initialement présente, en phase gaz ou liquide, dans les tubulures du dispositif F, ce qui conduirait à la formation éventuelle d'acide nitrique. La vanne 6 est reliée par un tuyau flexible en Téflon® à un flacon de soude à 2%p/p destiné à neutraliser le NO₂ en excès. Le montage est réalisé de façon à ce que la bouteille se trouve au-dessus du réservoir R et que le NO₂ puisse s'écouler par gravité. La vanne de la bouteille est ensuite ouverte, suivie des vannes 1,3,4,5 et 6. On observe alors un dégagement gazeux dans le flacon contenant la soude. L'ouverture de la vanne 6 est contrôlée de façon à maintenir le dégagement gazeux à un niveau tel que le NO₂ soit effectivement détruit pendant son passage dans le flacon. Le dispositif est ainsi purgé avec du NO₂ gaz pendant une minute. Après ce temps, les vannes 5 et 6 sont fermées et on laisse le système s'équilibrer et le NO₂couler de la bouteille vers le réservoir et se condenser complètement dans ce dernier. Au bout de 15 minutes, on ferme les vannes 3 et 4 et on déconnecte le réservoir en conservant l'ensemble E formé par ce dernier et par les vannes 4 et 5. L'ensemble E a été au préalable taré et on détermine alors la quantité de NO₂ présente à l'intérieur du réservoir par pesée.

Pour introduire le NO₂ dans le réacteur on suit le protocole suivant (figure 1B).

Les vannes 1' et 2' étant reliées entre elles et ouvertes, le réacteur est d'abord chargé en CO₂ à l'état supercritique (40°C à 8 Mpa (80 bars)). On insère alors l'ensemble E sur le circuit d'alimentation en CO₂ du réacteur selon le schéma 2 entre les vannes 1' et 2', ces deux dernières étant fermées. On ouvre la vanne 2' puis la vanne 5, la pression s'équilibre alors entre le réservoir R et le réacteur. Une pression résultante de 7,5 MPa (75 bars) est mesurée par le manomètre Pr. De l'autre côté, la pompe est mise en marche jusqu'à atteindre une pression de consigne de 9 MPa (90 bars) mesurée par le manomètre Pp. On ouvre alors les vannes 1' et 4 de façon que le CO₂ puisse s'écouler de la pompe vers le réacteur et transférer tout le NO₂ à l'intérieur de celui-ci. Lorsque la 5 pression atteint 9 MPa (90 bars) à l'intérieur du réacteur, on considère que tout le NO₂ a été transféré et on ferme la vanne 2'. Le réacteur est muni de 2 hublots en saphir qui permettent par ailleurs de vérifier que le milieu réactionnel présente bien la couleur caractéristique rousse du NO₂

### Description du réacteur

Le réacteur en Inox 316 L, d'une capacité de 250 mL, a été fourni par Parr Industrie (Pₘₐₓ = 30 Mpa (300 bars), tₘₐₓ = 150°C). Il est thermostaté, muni de 2 hublots en saphir, équipé d'un agitateur magnétique. Une plaque en Téflon® 15 perforée est placée à l'intérieur, ce qui permet de définir 2 compartiments dans le réacteur. La partie inférieure A permet la rotation du barreau magnétique L'échantillon est placé dans la partie supérieure B. La pompe de mise en pression du CO₂ est une pompe pneumatique à piston Top Industrie (réf 0902 ) 10000, Pₘₐₓ = 60 Mpa (600 bars))
Mode opératoire : Protocole 2.
Description du réacteur
On utilise le même réacteur en Inox 316L d'une capacité de 250mL que dans le protocole 1.

### Mode opératoire

Les échantillons étant chargés dans le réacteur (figure 2B), les vannes d'entrée du CO₂ ou du gaz sous-pression, V1 et V2, sont ouvertes ainsi que le déverseur D placé en sortie (TESCOM réf : 26-1700 avec cartouche de traçage), de manière à balayer l'air contenu dans le réacteur grâce à un débit de gaz inerte. Le déverseur est ensuite fermé afin de charger le réacteur en fluide dense à la température et à la pression de travail. Si le fluide dense est du CO₂, la pompe à piston (TOP INDUSTRIE réf 0902 10000, Pmax= 60 Mpa (600 bars)) est utilisée pour atteindre la pression de travail. Si le fluide dense est un gaz comprimé (azote ou argon), on remplit le réacteur de manière séquentielle en utilisant la tubulure entre les vannes V5 et V6 comme réserve tampon, évitant la mise en contact direct de la bouteille, et du réacteur. La pression dans le réacteur est contrôlée grâce à un capteur de pression (Pr). La quantité de NO₂ souhaitée est ensuite introduite dans le réacteur, grâce au dispositif d'injection décrit ci-dessous, V4 étant ouverte.

### Protocole d'injection du NO₂

Le NO₂ est introduit dans le réacteur grâce à un module d'injection sous-pression (TOP INDUSTRIE réf 1644 1000) présenté sur la figure 2A. Ce module d'injection est un multiplicateur de pression, la pression d'injection étant réglée grâce à une contre-pression d'air comprimé égale à un huitième de la pression d'injection, ce rapport correspondant au rapport des sections des cylindres contenant d'une part le NO₂ et d'autre part l'air comprimé. La bouteille de NO₂ (Air Liquide, réf DR 030259) est connectée à l'injecteur par les vannes V1', V3' et V4'. Le compartiment de l'injecteur contenant le N02 est maintenu à environ 13°C de sorte que le NO₂ se trouve à l'état liquide avant injection dans le réacteur. Le volume total du compartiment de NO₂ est égal à 50 ml, et le volume réel injecté est connu grâce à la lecture du déplacement du piston de l'injecteur. Le remplissage de l'injecteur est réalisé en ouvrant les vannes V1', V3' et V4' (connexion bouteille-injecteur) et la quantité de NO₂ prélevée est contrôlée grâce au circuit secondaire d'air comprimé (V7' et V8' ouvertes, V6' et V9' fermées). Le transfert de la quantité de NO₂ souhaitée vers le réacteur d'oxydation sous-pression est effectué alors que V1' , V3' , V4' sont fermées et V5' ouverte, et contrôlée en ouvrant V6' et V9', V7' et V8' étant fermées. Un circuit d'inertage à l'azote permettant le pré-séchage et la purge des tubulures et de l'injecteur est prévu sur l'ensemble du dispositif d'injection.

### Protocole de lavage.

En fin de réaction, les échantillons oxydés sont lavés par dilution avec du CO₂ supercritique. Les vannes V1 et V4 sont alors ouvertes et le déverseur D est réglé à la pression souhaitée pour le lavage (généralement 9-10 MPa (90-100 bars)). Le déverseur est un régulateur de pression amont qui permet donc d'assurer une pression constante dans le réacteur. Le déverseur est chauffé de sorte à éviter la formation de carboglace qui pourrait avoir lieu lors de la détente du flux de sortie de la pression du réacteur à la pression atmosphérique. Ce lavage permet d'éliminer la majeure partie des composés présents dans le réacteur. Le réacteur est ensuite dépressurisé lentement de manière à maintenir une température constante.

### Exemples 1 à 5 réalisés selon le mode opératoire du protocole 1 :

*Exemple 1* : 2,90 g de fibres TENCELL® ont été placés dans le compartiment B du réacteur (Figure 1B), qui est ensuite rempli avec du dioxyde de carbone supercritique (40°C et 8 MPa (80 bars). 33g de dioxyde d'azote sont alors introduits dans le réacteur selon le protocole 1. La réaction est réalisée sous agitation à 40°C et 9 MPa (90 bars) pendant 4 heures. Les conditions réactionnelles et le rapport CO₂/NO₂ utilisés définissent une phase liquide expansée. On maintient la température et la pression et on procède à un lavage avec CO₂ dans des conditions supercritiques. La dépressurisation est suffisamment lente pour que la température reste constante. Après ouverture du réacteur, les fibres traitées sont retirées et lavées 3 fois avec un mélange eau : isopropanol (1 :1) et 2 fois avec de l'isopropanol pur pour enlever l'eau. L'échantillon est séché dans une étuve à 60 °C pendant 3 heures. On récupère 3,15 g de cellulose oxydée, qui se présente toujours sous l'aspect de fibres de couleur blanche. Détermination du taux d'oxydation : 200 mg de cellulose ont été dissous dans 2 mL de NaOH 0,5M et dilués avec 8 mL d'eau. La solution a été titrée avec une solution standard de HCl 0,05 M jusqu'à la neutralité, en utilisant la phénolphtaléine comme indicateur. Un blanc a été fait sans addition de cellulose. Le contenu en acide carboxylique ainsi mesuré est de 14 %.

*Exemple 2:* 3,29 g de fibres TENCELL® et 2,2.g de fibres Rayonne® ont été placés séparément dans le compartiment B du réacteur (Figure 1B), qui est ensuite rempli avec du dioxyde de carbone supercritique (40°C et 8 MPa (80 bars)). 33g de dioxyde d'azote sont alors introduits dans le réacteur selon le protocole 1. La réaction est réalisée sous agitation à 40°C et 9 MPa (90 bars) pendant 5 heures. Les conditions réactionnelles et le rapport CO₂/NO₂ utilisés définissent une phase liquide expansée. A la fin de la réaction, on effectue un "lavage par dilution" du réacteur en générant un débit de fuite dans le réacteur tout en maintenant la pression, grâce à la pompe qui apporte du CO₂ pur sous pression. Après dépressurisation, les fibres traitées sont retirées du réacteur et lavées 3 fois avec un mélange eau : isopropanol (1 : 1), puis avec l'isopropanol pur pour enlever l'eau. On récupère alors un matériau fibreux homogène de couleur blanche avec un contenu en acide carboxylique de 16 % pour les fibres TENCELL® et de 17 % pour les fibres Rayonne®.

*Exemple 3 :* 3,1 g de fibres TENCELL®, 2,7 g de fibres Rayonne® et un morceau d'une éponge Spontex® de 1,5 g ont été placés séparément dans le compartiment B du réacteur (Figure 1B), qui est ensuite rempli avec du dioxyde de carbone supercritique (40°C et 8 MPa (80 bars)). 33g de dioxyde d'azote sont alors introduits dans le réacteur selon le protocole 1. La réaction est réalisée sous agitation à 40°C et 9 . MPa (90 bars) pendant 7 heures. Les conditions réactionnelles et le rapport CO₂/NO₂ utilisés définissent une phase liquide expansée. A la fin de la réaction on effectue un "lavage par dilution" du réacteur en générant un débit de fuite dans le réacteur tout en maintenant la pression, grâce à la pompe qui apporte du CO₂ pur sous pression. Après dépressurisation, les fibres traitées, de couleur blanche, sont retirées du réacteur et lavées 3 fois avec un mélange eau : isopropanol (1 : 1), puis avec l'isopropanol pur pour enlever l'eau.

Le contenu en acide carboxylique est de 17 % pour les fibres TENCELL®, de 18,5% pour les fibres Rayonne® et de 17% pour l'éponge.

*Exemple 4 :* 4,05 g de fibres TENCELL®, 2, 9 g de fibres Rayonne® et un morceau d'une éponge Spontex® de 1,3 g ont été placés dans le compartiment B du réacteur (Figure 1B), qui est ensuite rempli avec du dioxyde de carbone supercritique (40°C et 8 MPa (80 bars)). 33g de dioxyde d'azote sont alors introduits dans le réacteur selon le protocole 1. La réaction est réalisée sous agitation à 40°C et 9 MPa (90 bars) pendant 2,2 heures. Les conditions réactionnelles et le rapport CO₂/NO₂ utilisés définissent une phase liquide expansée. A la fin de la réaction on effectue un "lavage par dilution" du réacteur en générant un débit de fuite dans le réacteur tout en maintenant la pression, grâce à la pompe qui apporte du CO₂ pur sous pression. Après dépressurisation, les fibres traitées sont retirées du réacteur et lavées 3 fois avec un mélange eau : isopropanol (1 : 1) puis avec l'isopropanol pur pour enlever l'eau. Le contenu en acide carboxylique est de 11 % pour les fibres TENCELL®, de 12% pour les fibres Rayonne® et de 11% pour l'éponge. Les fibres TENCELL® et Rayonne® sont de couleur blanche.

Des résultats similaires (oxydation ménagée) ont été obtenus avec des fibres textiles naturelles (coton, lin, etc...).

*Exemple 5 :* En opérant dans les mêmes conditions que dans l'exemple 4, on procède à l'oxydation d'un tissu en rayonne (tissage et mailles différents). Le tissu oxydé obtenu est stérilisé par rayonnement γ. Son contenu en acide carboxylique est de 12%.

*Exemple 6* : 1,4 g de fibres Rayonne et 1,5 g de linters de coton ont été placés dans le compartiment B du réacteur (Figure 2B), qui est ensuite rempli avec du dioxyde de carbone (42°C et 10 MPa (100 bars)). 33g, de dioxyde d'azote sont alors introduits dans le réacteur selon le protocole 2. La réaction est réalisée sous agitation à 42°C et 10 MPa (100 bars) pendant 15 heures. Les conditions réactionnelles et le rapport CO₂/NO₂ utilisés définissent une phase liquide expansée. A la fin de la réaction, on procède au lavage et au traitement de l'échantillon dans les mêmes conditions que dans l'exemple 2. Le contenu en acide carboxylique est de 15,9 % pour les fibres rayonnes et de 6,4 % pour les linters de coton.

*Exemple 7* : 2,9 g de fibres Rayonne ont été placés dans le compartiment B du réacteur (Figure 2B), qui est ensuite rempli avec du dioxyde de carbone (40°C est 7,5 MPa (75 bars)). 2,5g de dioxyde d'azote sont alors introduits dans le réacteur selon le protocole 2. La réaction est réalisée sous agitation à 40°C et 7,5 MPa (75 bars) pendant 4 heures. Les conditions réactionnelles et le rapport CO₂/NO₂ utilisés définissent une phase gazeuse densifiée. A la fin de la réaction, on procède au lavage et au traitement de l'échantillon dans les mêmes conditions que dans l'exemple 2. On récupère alors un matériau fibreux homogène avec un contenu en acide carboxylique de 10 %.

*Exemple 8* : 1 g de fibres Rayonne ont été placés dans le compartiment B du réacteur (Figure 2B), qui est ensuite rempli avec du dioxyde de carbone (40°C et 7,5 MPa (75 bars)). 2,5g de dioxyde d'azote sont alors introduits dans le réacteur selon le protocole 2. La réaction est réalisée sous agitation à 40°C et 7,5 MPa (75 bars) pendant 15 heures. Les conditions réactionnelles et le rapport CO₂/NO₂ utilisés définissent une phase gazeuse densifiée. A la fin de la réaction, on procède au lavage et au traitement de l'échantillon dans les mêmes conditions que dans l'exemple 2. On récupère alors un matériau fibreux homogène avec un contenu en acide carboxylique de 15,9 %.

*Exemple 9 :* 3 g de fibres Rayonne ont été placés dans le compartiment B du réacteur (Figure 2B), qui est ensuite rempli avec du dioxyde de carbone (34°C et 9,5 MPa (95 bars)). 33g de dioxyde d'azote sont alors introduits dans le réacteur selon le protocole 2..La réaction est réalisée sous agitation à 34°C et 9,5 MPa (95 bars) pendant 4 heures. Les conditions réactionnelles et le rapport CO₂/NO₂ utilisés définissent une phase liquide expansée. A la fin de la réaction, on procède au lavage et au traitement de l'échantillon dans les mêmes conditions que dans l'exemple 2. On récupère alors un matériau fibreux homogène avec un contenu en acide carboxylique de 10 %.

*Exemple 10* : 3,4 g de fibres Rayonne ont été placés dans le compartiment B du réacteur (Figure 2B), qui est ensuite rempli avec du dioxyde de carbone (23°C et 8,5 MPa (85 bars)).68 g de dioxyde d'azote sont alors introduits dans le réacteur selon le protocole 2. La réaction est réalisée sous agitation à 23°C et 8,5 MPa (85 bars) pendant 4 heures. Les conditions réactionnelles et le rapport CO₂/NO₂ utilisés définissent une phase liquide expansée. A la fin de la réaction, on procède au lavage et au traitement de l'échantillon dans les mêmes conditions.que dans l'exemple 2. On récupère alors un matériau fibreux homogène avec un contenu en acide carboxylique de 3,2%.

*Exemple 11 :* 2, 9 g de fibres Rayonne ont été placés dans le compartiment B du réacteur (Figure 2B), qui est ensuite rempli avec du dioxyde de carbone supercritique (60°C et 100 bars). 33g de dioxyde d'azote sont alors introduits dans le réacteur selon le protocole 2. La réaction est réalisée sous agitation à 60°C et 10 MPa (100 bars) pendant 4 heures. Les conditions réactionnelles et le rapport CO₂/NO₂ utilisés définissent une phase liquide expansée. A la fin de la réaction, on procède au lavage et au traitement de l'échantillon dans les mêmes conditions que dans l'exemple 2. On récupère alors un matériau avec un contenu en acide carboxylique de 18,6 %.

*Exemple 12 :* 3 g de fibres Rayonne ont été placés dans le compartiment B du réacteur (Figure 2B), qui est ensuite rempli avec du dioxyde de carbone (42°C et 18 MPa (180 bars)). 33 g de dioxyde d'azote sont alors introduits dans le réacteur selon le protocole 2. La réaction est réalisée sous agitation à 42°C et 18 MPa (180 bars) pendant 4 heures. Les conditions réactionnelles et le rapport CO₂/NO₂ utilisés définissent une phase liquide expansée. A la fin de la réaction, on procède au lavage et au traitement de l'échantillon dans les mêmes conditions que dans l'exemple 2. On récupère alors un matériau fibreux homogène avec un contenu en acide carboxylique de 11%.

Exemple *13 :* 3,2 g de fibres Rayonne ont été placés dans le compartiment B du réacteur (Figure 2B), qui est ensuite rempli avec du dioxyde de carbone supercritique (41°C et 9,5 MPa (95 bars)). 52g de dioxyde d'azote sont alors introduits dans le réacteur selon le protocole 2. La réaction est réalisée sous agitation à 41°C et 9,5 MPa (95 bars) pendant 4 heures. Les conditions réactionnelles et le rapport CO₂/NO₂ utilisés définissent une phase liquide expansée. A la fin de la réaction, on procède au lavage et au traitement de l'échantillon dans les mêmes conditions que dans l'exemple 2. On récupère alors un matériau fibreux homogène avec un contenu en acide carboxylique de 14,4 %.

*Exemple 14 :* 1,65 g de fibres Rayonne et 0, 91g de linters de coton ont été placés dans le compartiment B du réacteur (Figure 2B), qui est ensuite rempli avec du dioxyde de carbone souscritique (40°C et 5,7 MPa) . 2,5 g de dioxyde d'azote sont alors introduits dans le réacteur selon le protocole 2. La réaction est réalisée sous agitation à 40°C et 5,7 MPa pendant 4 heures. Les conditions réactionnelles et le rapport CO₂/NO₂ utilisés définissent une phase gazeuse densifiée. A la fin de la réaction, on procède au lavage et au traitement de l'échantillon dans les mêmes conditions que dans l'exemple 2. On récupère alors un matériau fibreux homogène avec un contenu en acide carboxylique de 11 % pour la rayonne et de 4% pour les linters de coton.

*Exemple 15 :* 1,56 g de fibres Rayonne et 1,02 g de linters de coton ont été placés dans le compartiment B du réacteur (Figure 2B), qui est ensuite rempli avec de l'azote comprimé (40°C et 8 MPa). 2,5g de dioxyde d'azote sont alors introduits dans le réacteur selon le protocole 2. La réaction est réalisée sous agitation à 40°C et 8MPa pendant 4 heures. Les conditions réactionnelles et le rapport CO₂/NO₂ utilisés définissent une phase gazeuse densifiée. A la fin de la réaction, on procède à un lavage par dilution en introduisant de l'azote sous pression tout en maintenant un débit de fuite. On procède ensuite à un lavage par le mélange isopropanol eau dans les mêmes conditions que dans l'exemple 2. On récupère alors un matériau fibreux homogène avec un contenu en acide carboxylique de 14 % pour la rayonne et 6% pour les linters de coton.

*Exemple 16 :* 1 g de fibres Rayonne ont été placés dans le compartiment B du réacteur (Figure 2B), qui est ensuite rempli avec de l'argon comprimé (40°C et 7,5 MPa). 2,5g de dioxyde d'azote sont alors introduits dans le réacteur selon le protocole 2. La réaction est réalisée sous agitation à 40°C et 7,5 MPa pendant 4 heures. Les conditions réactionnelles et le rapport CO₂/NO₂ utilisés définissent une phase gazeuse densifiée. A la fin de la réaction, on effectue un "lavage par dilution" du réacteur en générant un débit de fuite dans le réacteur tout en maintenant la pression, grâce à la pompe qui apporte de l'argon pur sous pression. On procède ensuite à un lavage par le mélange isopropanol/ eau dans les mêmes conditions que dans l'exemple 2.On récupère alors un matériau fibreux homogène avec un contenu en acide carboxylique de 14,4 %.

*Exemple 17* : 3,01 g de glucomannane (ref M1HCO, Kalis, France) ont été placés dans un bécher contenant un barreau magnétique et fermé par une membrane en téflon. Ce bécher est placé dans le compartiment B du réacteur (Figure 2B), qui est ensuite rempli avec du dioxyde de carbone supercritique (40°C et 7,5 MPa). 5 g de dioxyde d'azote sont alors introduits dans le réacteur selon le protocole 2. La réaction est réalisée sous agitation à 40°C et 7,5 MPa pendant 4 heures. Les conditions réactionnelles et le rapport CO₂/NO₂ utilisés définissent une phase liquide expansée. A la fin de la réaction, on procède au lavage et au traitement de l'échantillon dans les mêmes conditions que dans l'exemple 2. On récupère alors un matériau poudreux homogène avec un contenu en acide carboxylique de 7,8 %.

*Exemple 18:* 3,15 g d'amidon de pomme de terre (Roquette France) ont été placés dans un bécher contenant un barreau magnétique et fermé par une membrane en téflon. Ce bécher est placé dans le compartiment B du réacteur (Figure 2B); qui est ensuite rempli avec du dioxyde de carbone supercritique (40°C et 7,5MPa). 5 g de dioxyde d'azote sont alors introduits dans le réacteur selon le Protocole 2. La réaction est réalisée sous agitation à 40°C et 7,5 MPa pendant 4 heures. Les conditions réactionnelles et le rapport CO₂/NO₂ utilisés définissent une phase liquide expansée. A la fin de la réaction, on procède au lavage et au traitement de l'échantillon dans les mêmes conditions que dans l'exemple 2. On récupère alors un matériau poudreux homogène avec un contenu en acide carboxylique de 8,1 %.

## Revendications

1. Procédé d'oxydation contrôlée d'oligo-et/ou de polysaccharides contenant des groupes hydroxyles primaires -CH₂OH libres, à l'aide d'un agent oxydant, **caractérisé en ce qu'**on réalise la réaction d'oxydation dans un fluide densifié inerte vis-à-vis des agents oxydants mis en oeuvre.

2. Procédé selon la revendication 1, **caractérisé en ce que** ledit fluide est un gaz inerte.

3. Procédé selon la revendication 2, **caractérisé en ce que** ledit gaz inerte est choisi parmi les gaz rares, CO₂, le diazote, les gaz perhalogénés, et leurs mélanges.

4. Procédé selon la revendication 3, **caractérisé en ce que** ledit gaz inerte est choisi parmi CO₂, le diazote ou l'argon, ou leurs mélanges.

5. Procédé selon l'une quelconque des revendications 1 à 4, **caractérisé en ce que** ledit fluide est sous forme d'une phase gazeuse densifiée.

6. Procédé selon l'une quelconque des revendications 1 à 4, **caractérisé en ce que** ledit fluide est sous forme d'une phase liquide expansée.

7. Procédé selon l'une quelconque des revendications 4 à 6, **caractérisé en ce que** le ou les gaz inertes sont utilisés en mélange avec d'autres co-solvants liquides.

8. Procédé selon l'une quelconque des revendications 1 à 7, **caractérisé en ce que** l'agent oxydant est le dioxyde d'azote, à savoir le NO₂ le dimère N₂O₄ ou leurs mélanges, utilisés le cas échéant en présence d'oxygène.

9. Procédé selon l'une quelconque des revendications 1 à 8 **caractérisé en ce qu'**on opère dans un système clos, sous pression à une température de l'ordre de 20 à 60°C, et sous une pression de 2 à 40 MPa (20 et 400 bars).

10. Procédé selon, la revendication 9, **caractérisé en ce qu'**on opère à une température de 20 à 40°C et sous 6 à 18 MPa (60 à 180 bars).

11. Procédé selon l'une quelconque des revendications 1 à 10, **caractérisé en ce qu'**on place les polysaccharides dans un réacteur clos, qui est ensuite rempli du fluide densifié inerte.

12. Procédé selon l'une quelconque des revendications 1 à 11, **caractérisé en ce que** l'agent oxydant est utilisé en excès par rapport à la quantité de CH₂OH qu'on souhaite oxyder.

13. Procédé selon l'une quelconque des revendications 1 à 12, **caractérisé en ce qu'**à la fin de la réaction, on élimine NO₂ en générant un débit de fuite dans le réacteur tout en maintenant la pression constamment au-dessus ou au même niveau que la pression de travail.

14. Procédé selon l'une quelconque des revendications précédentes, **caractérisé par** l'utilisation de cellulose, d'amidon ou de glucomannane en tant que polysaccharide.

## Claims

1. A method for the controlled oxidation of the oligo- and/or polysaccharides containing free -CH₂OH primary hydroxyl groups, using an oxidizing agent, **characterized in that** the oxidation reaction is carried out in a densified fluid which is inert in relation to the oxidizing agents employed.

2. The method according to claim 1, **characterized in that** said fluid is an inert gas.

3. The method according to claim 2, **characterized in that** said inert gas is chosen from the rare gases, CO₂ , dinitrogen, perhalogenated gases, and mixtures thereof.

4. The method according to claim 3, **characterized in that** said inert gas is chosen from CO₂, dinitrogen or argon, or mixtures thereof.

5. The method according to claim 1 to 4, **characterized in that** said fluid is in the form of a densified gas phase.

6. The method according to anyone of claims 1 to 4, **characterized in that** fluid is in form of an expanded liquid phase.

7. The method according to anyone of claims 4 to 6, **characterized in that** the inert gas(es) is/are used as a mixture with other liquid cosolvents.

8. The method according to any one of claims 1 to 7, **characterized in that** the oxidizing agent is nitrogen dioxide, i.e. NO₂, the N₂O₄ dimer or mixtures thereof, used, where appropriate, in the presence of oxygen.

9. The method according to any one of claims 1 to 8, **characterized in that** the procedure is carried out in a closed system, under pressure at a temperature of the order of 20 to 60°C, and under a pressure of the order cf from 2 to 40 MPa (20 to 400 bars).

10. The method according to claim 9, **characterized in that** it is carried out at a temperature of 20 to 40°C and under a pressure of 6 to 18 MPa (60 to 180 bars).

11. The method according to any one claims 1 to 10, **characterized in that** the polysaccharides are placed in a closed reactor, which is then filed with the inert densified fluid.

12. The method according to any one of claims 1 to 11, **characterized in that** the oxidizing agent is used in excess in relation to the amount of CH₂OH that it is desired to oxidize.

13. The method according to any one of claims 1 to 12, **characterized in that**, at the end of the reaction, NO₂ is eliminated by generating a leakage flow rate in the reactor while at the same time maintaining the pressure constantly above or a the same level as the working pressure.

14. The method according to any one of the preceding claims, **characterized by** the use of cellulose, starch or glucomannan as polysaccharide.

## Patentansprüche

1. Verfahren zur kontrollierten Oxidation von Oligo- und/oder Polysacchariden, die freie primäre Hydroxygruppen -CH₂OH enthalten, mit Hilfe eines Oxidationsmittels, **dadurch gekennzeichnet, dass** die Oxidationsreaktion in einem verdichteten Fluid durchgeführt wird, das gegenüber eingesetzten Oxidationsmitteln inert ist.

2. Verfahren gemäß Anspruch 1, **dadurch gekennzeichnet, dass** das Fluid ein Inertgas ist.

3. Verfahren gemäß Anspruch 2, **dadurch gekennzeichnet, dass** das Inertgas aus Edelgasen, CO₂, Distickstoff, perhalogenierten Gasen und Gemischen davon ausgewählt ist.

4. Verfahren gemäß Anspruch 3, **dadurch gekennzeichnet, dass** das Inertgas aus CO₂, Distickstoff oder Argon oder Gemischen davon ausgewählt ist.

5. Verfahren gemäß einem der Ansprüche 1 bis 4, **dadurch gekennzeichnet, dass** das Fluid in Form einer verdichteten Gasphase vorliegt.

6. Verfahren gemäß einem der Ansprüche 1 bis 4, **dadurch gekennzeichnet, dass** das Fluid in Form einer expandierten flüssigen Phase vorliegt.

7. Verfahren gemäß einem der Ansprüche 4 bis 6, **dadurch gekennzeichnet, dass** das oder die Inertgase im Gemisch mit anderen, flüssigen Cosolventien verwendet werden.

8. Verfahren gemäß einem der Ansprüche 1 bis 7, **dadurch gekennzeichnet, dass** es sich bei dem Oxidationsmittel um Stickstoffdioxid, nämlich NO₂, das Dimer N₂O₄ oder deren Gemische handelt, die gegebenenfalls in Gegenwart von Sauerstoff verwendet werden.

9. Verfahren gemäß einem der Ansprüche 1 bis 8, **dadurch gekennzeichnet, dass** in einem geschlossenen System unter Druck bei einer Temperatur in der Größenordnung von 20 bis 60°C und unter einem Druck von 2 bis 40 MPa (20 bis 400 bar) gearbeitet wird.

10. Verfahren gemäß Anspruch 9, **dadurch gekennzeichnet, dass** bei einer Temperatur von 20 bis 40°C und unter 6 bis 18 MPa (60 bis 180 bar) gearbeitet wird.

11. Verfahren gemäß einem der Ansprüche 1 bis 10, **dadurch gekennzeichnet, dass** die Polysaccharide in einen geschlossenen Reaktor gegeben werden, der anschließend mit inertem verdichteten Fluid gefüllt wird.

12. Verfahren gemäß einem der Ansprüche 1 bis 11, **dadurch gekennzeichnet, dass** das Oxidationsmittel im Überschuss bezüglich der Menge an CH₂OH, die man oxidieren möchte, verwendet wird.

13. Verfahren gemäß einem der Ansprüche 1 bis 12, **dadurch gekennzeichnet, dass** am Ende der Reaktion NO₂ entfernt wird, indem man im Reaktor eine Leckströmung erzeugt, während der Druck ständig oberhalb oder auf demselben Niveau wie der Arbeitsdruck gehalten wird.

14. Verfahren gemäß einem der vorstehenden Ansprüche, **dadurch gekennzeichnet, dass** Cellulose, Stärke oder Glucomannan als Polysaccharid verwendet wird.
